# FASCICULE DE BREVET EUROPEEN

(11) **EP 3 868 189 B1**
(45) Date de publication et mention de la délivrance du brevet: **24.12.2025**
(21) Numéro de dépôt: 21157366.2
(22) Date de dépôt: 16.02.2021
(51) Int. Cl.: A01B 17/00, A01B 73/06

(54) **DISPOSITIF DE BRAS DE TRACTION ARTICULE ET MACHINE AGRICOLE EQUIPEE D'UN TEL BRAS**
GELENKZUGARMVORRICHTUNG UND MIT EINEM SOLCHEN ARM AUSGESTATTETE LANDWIRTSCHAFTLICHE MASCHINE
DEVICE WITH ARTICULATED PULLING ARM AND AGRICULTURAL MACHINE PROVIDED WITH SUCH AN ARM

(30) Priorité: 20.02.2020 FR 2001714
(43) Date de publication de la demande: 25.08.2021
(73) Titulaire: Kuhn-Huard S.A.S, 44110 Chateaubriant (FR)
(72) Inventeur: DUCROQUET, Frédéric, 44110 VILLEPOT (FR)
(74) Mandataire: Ipsilon

(56) Documents cités:
- EP-A1- 0 088 140
- DE-A1- 3 631 874
- DE-U1- 9 206 879
- GB-A- 2 130 062
- US-A- 3 566 974

## Description

La présente invention concerne le domaine du machinisme et des équipements agricoles, notamment les machines pour le travail du sol, en particulier les charrues ou analogues, et a pour objet un dispositif de bras de traction articulé et une machine agricole équipée d'un tel bras.

Lors des interventions dans les champs, il est bien entendu souhaitable de pouvoir effectuer simultanément plusieurs opérations de travail du sol, au moyen de différents outils intégrés ou non dans une même machine.

Dans certains cas, il peut être avantageux de pouvoir raccrocher, occasionnellement ou temporairement, une machine secondaire ou un accessoire traîné(e) à un véhicule ou une machine principal(e).

Il peut notamment être intéressant de pouvoir, de manière automatique et lors de chaque passe, accrocher un tel accessoire en début de passe et le décrocher en fin de passe.

Dans le contexte du labour et pour réduire le nombre de passages lors des préparations de lit de semences, il est connu d'associer un équipement ou outil traîné complémentaire à la charrue, généralement un rouleau.

En effet, une action de roulage permet avantageusement de rappuyer le sol pour éviter le dessèchement d'un sol fraîchement labouré et d'en parfaire l'émiettement (réduction de la taille des mottes et formation de terre fine) pour assurer un meilleur contact des graines avec les particules de terre.

Pour cela, la charrue est de manière connue équipée d'un bras de traction pour traîner le rouleau et dispose d'un attelage permettant le décrochage automatique en fin de passe, donc de raie. Durant le passage en cours, le rouleau (généralement équipé d'une canne d'accrochage ou analogue) va travailler la bande qui a été labourée au passage précédent, sa largeur de travail étant normalement légèrement supérieure à celle de la charrue.

Le bras de traction est généralement fixé, avec faculté de positionnement en pivotement dans différentes positions, juste derrière la potence de la charrue, préférentiellement à l'avant du bâti devant le premier corps de labour. Une telle fixation permet au rouleau de travailler près de la charrue, de réduire les efforts latéraux et de limiter les contraintes sur l'arrière du bâti de la charrue.

Les documents GB 2 199 473 et DE 8 222 140 illustrent de tels bras de traction. Un bras de ce type est également prévu sur certaines charrues commercialisées par la Société Lemken pour la traction d'un rouleau plombeur latéral dénommé « Variopack ».

Le document GB 2 130 062 divulgue un bras de traction sous la forme d'une poutre, monté de manière fixe sur le bâti de la machine agricole et équipé à son extrémité libre d'un levier pivotant portant un moyen d'accrochage d'un outil à tracter. En outre, ce bras est équipé d'un vérin permettant de commander le décrochage dudit outil à volonté.

En outre, le document DE 92 06 879 divulgue une charrue équipée de deux bras de traction pivotants latéraux, montés chacun sur un côté du bâti de la charrue. Ces deux bras sont reliés entre eux par une barre de solidarisation cinématique et comporte des moyens de sollicitation élastique en position. Toutefois, aucun moyen de réglage spécifique de l'extension latérale ou de la position angulaire des bras n'est prévu.

Un tel bras de traction, lorsqu'il est monté mobile, notamment pivotant, peut prendre trois positions : une position déployée d'accrochage (dépassement latéral maximum par rapport à la machine et à la direction d'avance), une position repliée de transport (dépassement latéral minimum ou intégration dans l'encombrement de la machine par rabattement) et une position de travail dans laquelle il tracte l'accessoire ou la machine secondaire (position forcée sous contrainte et comprise entre les deux positions précédentes).

Dans ces réalisations connues, la position en pivotement ou inclinaison du bras de traction articulé par rapport à la structure de la machine et par rapport à la direction d'avance de la machine en utilisation (hors contrainte et sous contrainte) est fixée, lorsque cela est prévu, manuellement et discrètement par l'opérateur à l'aide d'une pièce de réglage du type secteur solidaire du bras et fournissant un certain nombre de positions discrètes d'inclinaison (positionnement angulaire autour de sa liaison pivot), dans lesquelles le bras peut être assujetti avec verrouillage pour les phases de travail et de transport.

Un élément déformable (ressort) permet (en relation avec le réglage par rapport au secteur) de solliciter sous contrainte élastique le bras vers une position d'attrape/d'accrochage et d'amortir le choc lors de l'accrochage effectif par le bras de l'outil ou de la machine à traîner.

Toutefois, tous les réglages de position nécessaires pour ces différentes configurations sont discrets. De plus, ils obligent l'opérateur à descendre à chaque fois du véhicule pour effectuer le réglage adéquat.

Le but principal de l'invention est de surmonter au moins le premier, préférentiellement les deux inconvénients précités.

A cet effet, l'invention a pour objet un dispositif de bras de traction articulé pour machine agricole décrit par l'objet de la revendication indépendante 1. Des modes de réalisation préférés sont décrits dans les revendications dépendantes.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

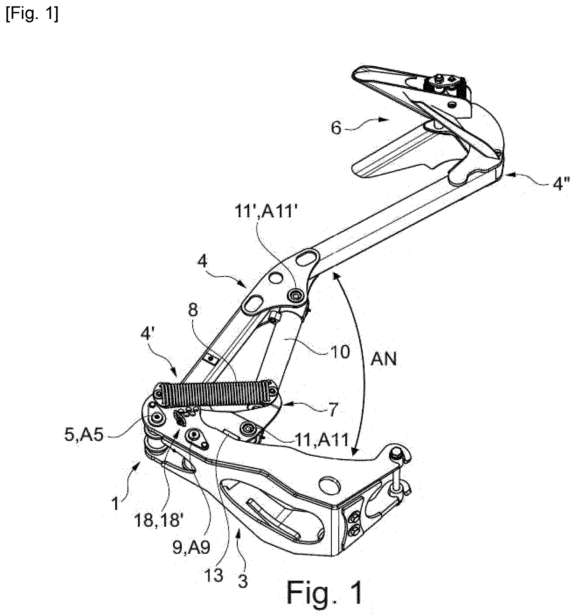

[Fig. 1] est une vue en perspective d'un dispositif de bras de traction articulé selon l'invention ;
[Fig. 2A],
   [Fig. 2B] et
   [Fig. 2C] sont des vues simplifiées de dessus du bras de la figure 1 (seul les composants principaux sont représentés) respectivement en configuration de transport, de travail et d'attrape (ou d'accrochage) ;
[Fig. 3A] est une vue partiellement éclatée du dispositif de bras de la figure 1 ;
[Fig. 3B] est une vue partielle et à une autre échelle du dispositif de bras de la figure 1, montrant plus particulièrement la zone d'articulation du dispositif ;
[Fig. 4A],

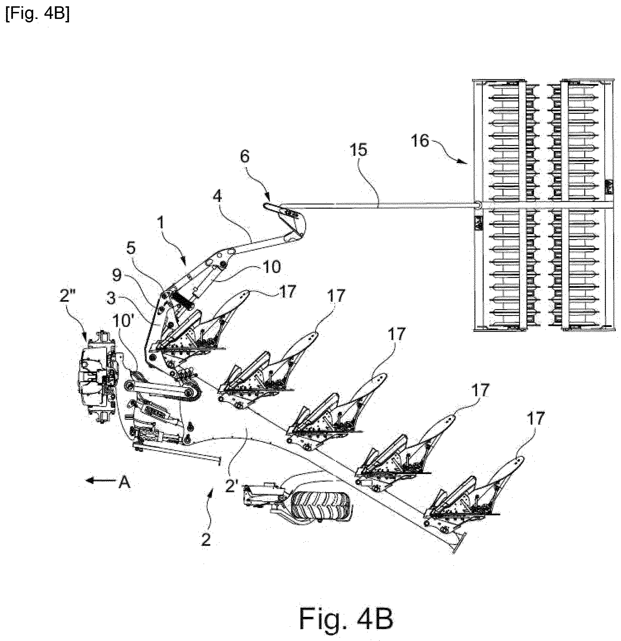

   [Fig. 4B] et

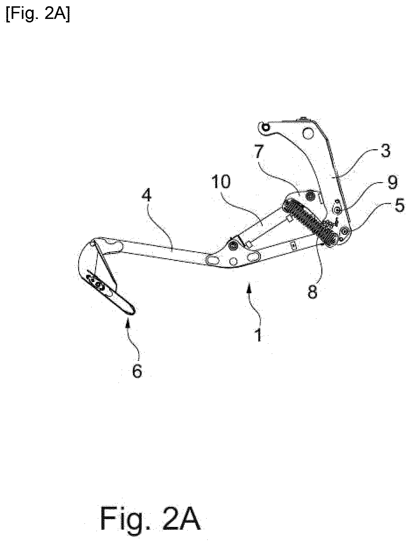

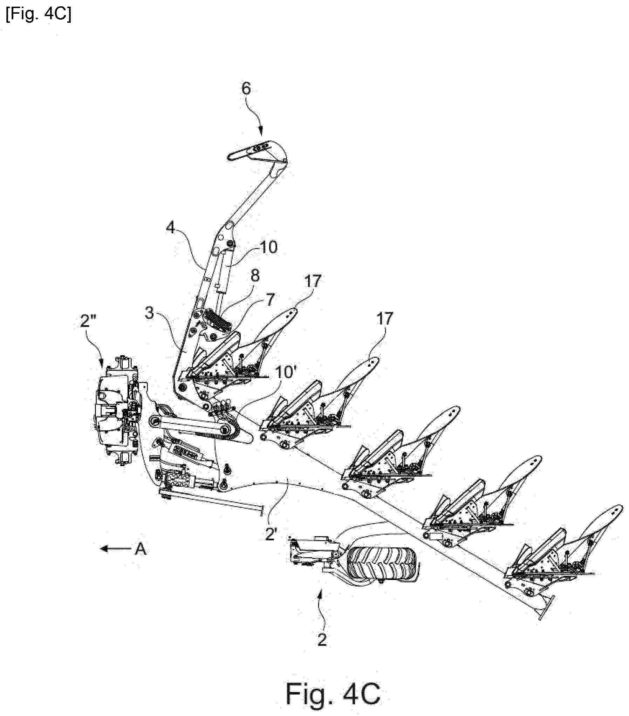

   [Fig. 4C] sont des vues de dessus d'une charrue portée réversible équipée d'un bras selon la figure 1, lequel est représenté dans les trois configurations des figures 2A à 2C respectivement (dans la figure 4B un outil trainé est aussi représenté).

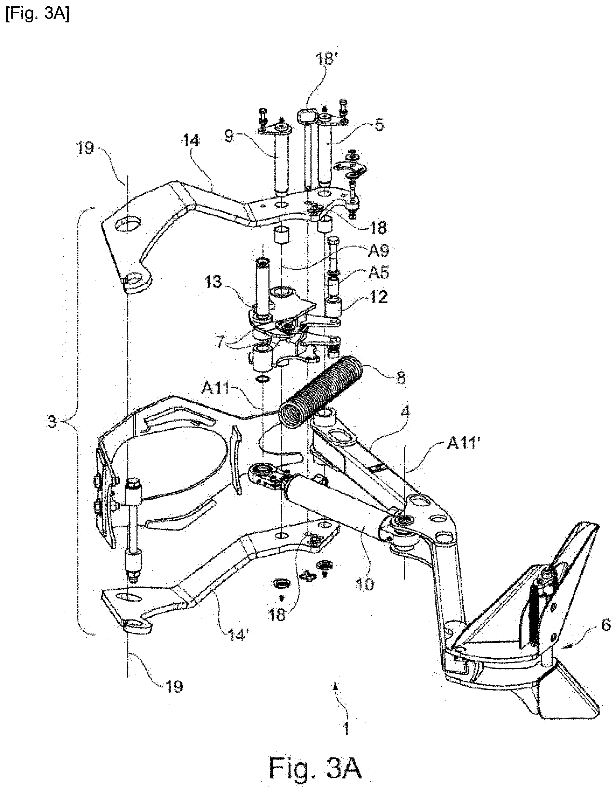

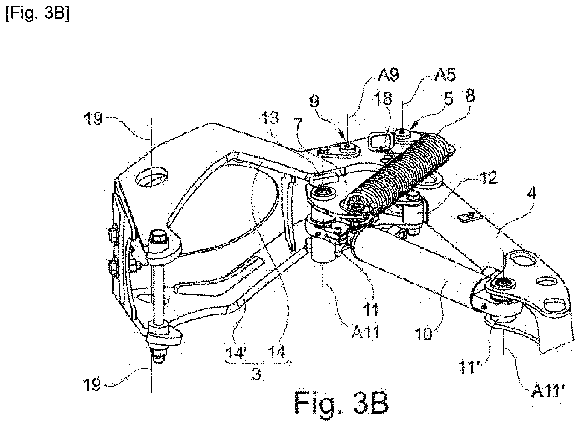

Les figures 1, 2 et 4, et partiellement au moins les figures 3, illustrent un dispositif 1 de bras de traction articulé pour machine agricole 2, notamment pour charrue.

Ce dispositif comprend, d'une part, une console 3 de fixation sur la machine 2, d'autre part, un bras 4 relié par une liaison pivot 5 à la console 3 au niveau de l'une 4' de ses deux extrémités 4', 4" et comportant au niveau de son autre extrémité 4" une ancre d'accrochage 6 et, enfin, une pièce 7 d'écartement ou de réglage de la position angulaire du bras 4 par rapport à la console 3, cette pièce 7 étant associée à au moins un élément 8 élastiquement déformable et reliée audit bras 4 et à ladite console 3.

Conformément à l'invention, la pièce de réglage 7 se présente sous la forme d'un secteur. Elle est reliée, d'une part, à la console 3 par une seconde liaison pivot 9 spécifique, distincte (c'est-à-dire différente) de la première liaison pivot 5 [bras 4/console 3] précitée et d'axe A9 parallèle à celui A5 de cette dernière et, d'autre part, au bras 4 par l'intermédiaire d'un organe allongé rigide 10, réglable en longueur.

En prévoyant une articulation pivot propre pour la pièce de réglage 7 par rapport à la console 3, l'invention permet de régler continûment la position en pivotement de bras de traction pivotant 4.

Avantageusement, la pièce de réglage 7 sous la forme d'un secteur est montée articulée par rapport à la console 3 et au bras 4.

En outre, l'un organe allongé rigide 10, avantageusement réglable en longueur de manière continue, par exemple télescopique, est préférentiellement relié à ses deux extrémités opposées, par des liaisons articulées 11, 11' respectives, préférentiellement à pivot, à la pièce de réglage 7 et au bras 4 pivotant.

La présence d'un tel organe de liaison 10 réglable en longueur permet d'élargir la plage de réglage continu de la position angulaire du bras 4 autour de la liaison pivot 5.

En plus de cette fonction de réglage, ce même organe de liaison 10 permet aussi de déterminer la course de rattrapage et de réaliser le repliage dudit bras 4, ce compte tenu notamment de son montage.

Préférentiellement, l'organe allongé rigide 10 se présente sous la forme d'un actionneur, par exemple un vérin hydraulique, pouvant être commandé de manière déportée (c'est-à-dire à distance) par l'intermédiaire d'un circuit 10', les axes A11, A11' de ses liaisons pivots 11, 11' (c'est-à-dire de son corps et de sa tige) étant avantageusement parallèles aux axes A5, A9 respectivement des liaisons pivots [bras 4/console 3] et [pièce de réglage 7/console 3]. Grâce aux deux liaisons pivot distinctes 5 et 9, lorsque la tige de l'actionneur rentre, c'est-à-dire se rétracte, le bras 4 vient, dans un premier temps, en butée sur la pièce de réglage 7, qui vient à son tour en butée sur la console 3. Une fois la tige de l'actionneur entièrement rentrée, la pièce de réglage 7 est en contact butée avec la console 3 et le bras 4, ce qui verrouille la position de transport.

L'actionneur allongé rigide 10, quand il prend la forme d'un vérin hydraulique double effet, est avantageusement relié directement au distributeur du véhicule tracteur.

Grâce à cette disposition, le positionnement du bras 4 peut être commandé aisément, de manière assistée, depuis le poste de conduite, la cabine du véhicule tracteur par exemple.

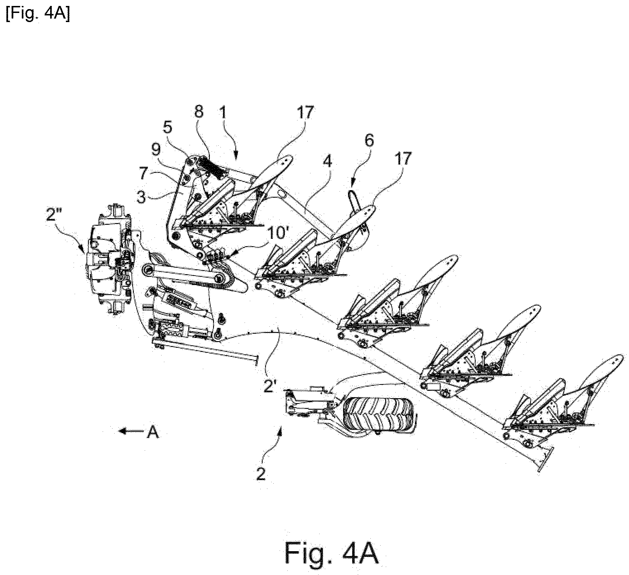

Afin de pouvoir fournir un calage stable du bras 4 en position repliée maximale (position de transport : figures 2A et 4A), il peut être prévu que la pièce de réglage 7 comporte une butée 12 glissante ou roulante, destinée à venir en appui sur le bras 4 lorsque ce dernier vient en repliement commandé contre la console 3, dans une configuration escamotée de transport du dispositif 1. Conformément à l'invention, lorsque l'actionneur 10 est en position « tige sortie » ou déployée, le bras 4 est en position pour tracter ou accrocher l'outil trainé ou la machine secondaire. De même, lorsque ce même actionneur 10 est en position « tige rentrée » ou rétractée, le bras 4 est calé de manière stable dans sa position repliée maximale (position de transport : figures 2A et 4A).

Il est ainsi possible d'escamoter le bras 4 jusque dans l'encombrement de la machine agricole 2. Dans sa position transport, quand le bras 4 est en position repliée maximale, le dispositif 1 de bras de traction articulé est effacé dans l'encombrement de la machine (voir figure 4A). Un tel escamotage limite les risques de collision et/ou d'accident avec des obstacles ou des personnes.

Dans le cas d'une machine agricole 2 sous forme de charrue réversible, le bras 4 s'intègre avantageusement dans sa position repliée entre les corps de labour droite et gauche 17 de la charrue 2. Le bras 4 s'intègre préférentiellement, en s'escamotant au niveau des deux premiers corps de labour, du côté du dispositif d'attelage 2". De cette manière, la sécurité est maximisée lors du transport et du remisage de la machine agricole 2.

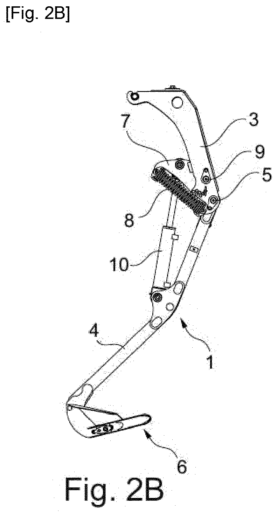

En vue de fournir, d'une part, une position d'arrêt stable et résistante aux contraintes lorsque le bras 4 tracte un outil traîné ou une machine secondaire et, d'autre part, un moyen d'arrêt supplémentaire en position de transport, la pièce de réglage 7 comporte au moins une butée fixe 13, destinée à venir en appui sur la console 3 lorsque le bras pivotant 4 vient en repliement commandé ou forcé contre la console 3 (cf. figures 2A et 2B).

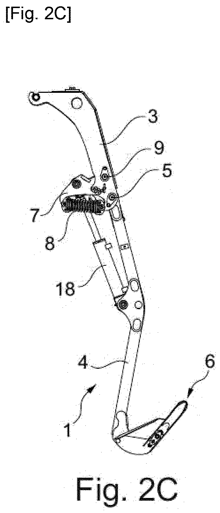

Comme le montrent par comparaison les figures 2B et 2C, 4B et 4C, et pour pouvoir fournir une fonction d'amortissement au moment de l'accrochage et d'application progressive des contraintes de traction, ledit au moins un élément 8 élastiquement déformable, par exemple sous la forme d'au moins un ressort hélicoïdal ou ressort à boudin, est arrangé pour relier la pièce de réglage 7 à la console 3 en la sollicitant en rotation autour de l'axe A9 de leur liaison pivot 9 commune, dans le sens d'une ouverture maximale de l'angle AN entre la console 3 et le bras pivotant 4.

En vue d'aboutir à une construction compacte, il peut être prévu que la console 3 comporte deux parois latérales 14, 14' entre lesquelles sont montés la pièce de réglage 7 et le bras 4 pivotant au niveau de paliers rotatoires respectifs d'axes A5 et A9, ladite console 3 se présentant avantageusement sous la forme d'une pièce allongée avec une section en U (fournissant ainsi un volume d'escamotage partiel).

La pièce 7 peut également présenter une structure à double parois entre lesquelles est montée l'une des extrémités (de la tige ou du corps) de l'actionneur 10. Chacune des deux parois de la pièce 7 comporte alors avantageusement une butée fixe 13 (dont chacune peut venir en contact avec une des parois latérales du U formant la console 3) et la butée roulante 12 est, par exemple, montée entre ces deux parois.

De par sa forme allongée, la console 3 a l'avantage d'épouser le bâti 2' de la machine 2. La console 3 s'intègre dans le prolongement dudit bâti, tout en ayant un encombrement minimum et en conservant un maximum de rigidité. En fonction des réglages de la machine agricole 2, notamment la largeur de travail dans le cas d'une charrue à largeur variable, la position du bras 4 doit être adaptée pour que la largeur de travail du rouleau ou de l'accessoire tracté soit adaptée à celle de la charrue. Ainsi, le déport du bras 4 est réglé pour déplacer latéralement le rouleau ou analogue afin de rappuyer la bande de terre travaillée lors du passage précédent. A cet effet, différents trous de brochage 18 sont prévus sur la console 3 au niveau de son extrémité en liaison avec le bras 4. Ces différents trous de brochage 18 vont permettre, en combinaison avec une goupille 18' adaptée de blocage en position, de limiter le déport maximum du bras 4.

Avantageusement, la pièce de réglage 7 présente également une structure avec deux parois parallèles dont chacune est reliée par un ressort 8 à l'une des parois précitées de la console 3. Le vérin 10 est alors quant à lui monté par un palier rotatoire formant liaison pivot 11 entre lesdites parois de la pièce de réglage 7.

Des modes de réalisation de l'invention concernent également comment le montrent les figures 4A à 4C, une machine agricole 2 portée, semi-portée ou tractée par un véhicule tracteur, notamment charrue réversible, comprenant un dispositif de bras de traction articulé 1 comportant une ancre d'accrochage 6 apte et destinée à venir en prise libérable avec une canne d'accrochage 15 d'un outil 16 destiné à être traîné temporairement au moins derrière ou à côté de la machine en cours d'utilisation.

Cette machine agricole 2 est caractérisée en ce que le dispositif de bras articulé est un dispositif 1 du type décrit ci-dessus.

Avantageusement, la console 3 du dispositif de bras articulé 1 est fixée à l'avant du bâti 2' de la machine agricole 2, préférentiellement au niveau ou à proximité de son dispositif d'attelage 2" avec le tracteur. Cette disposition permet de limiter le poids en porte-à-faux et garantit le bon fonctionnement de la machine agricole 2, comme si le dispositif 1 de bras de traction articulé n'était pas présent. Dans le cas précis de la charrue, la fixation à l'avant du bâti 2' évite une interférence avec les corps de labour 17, même lors de leur déclenchement pour franchir un obstacle. Comme le montrent les figures 1 et 3, la console 3 est fixée au bâti 2' via un axe vertical 19 qui les traverse tous deux de part en part. Une butée réalise l'arrêt en rotation.

Préférentiellement, la pièce de réglage 7 et le bras articulé 4 sont reliés entre eux par un actionneur linéaire 10, préférentiellement un vérin hydraulique, la position en rotation du bras articulé 4 autour de sa liaison pivot 5 avec la console 3 étant déterminée conjointement par la pièce de réglage 7 et sa position par rapport à la console 3 et par l'actionneur 10, préférentiellement commandé depuis le tracteur par un circuit 10' adapté.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif (1) de bras de traction articulé pour machine agricole (2), notamment pour charrue, comprenant, d'une part, une console (3) de fixation sur la machine (2), d'autre part, un bras (4) relié par une liaison pivot (5) à la console (3) au niveau de l'une (4') de ses deux extrémités et comportant au niveau de son autre extrémité (4") une ancre d'accrochage (6) et, enfin, une pièce (7) de réglage de la position angulaire du bras (4) par rapport à la console (3), cette pièce (7) étant associée à au moins un élément (8) élastiquement déformable et reliée audit bras (4) et à ladite console (3), la pièce de réglage (7) se présentant sous la forme d'un secteur et étant reliée, d'une part, à la console (3) par une seconde liaison pivot (9) spécifique, distincte de la première liaison pivot (5) bras (4)/console (3) précitée et d'axe (A9) parallèle à celui (A5) de cette dernière, et, d'autre part, au bras (4) par l'intermédiaire d'un organe allongé rigide (10), réglable en longueur,
dispositif (1) **caractérisé en ce que** ledit au moins un élément (8) élastiquement déformable, par exemple sous la forme d'au moins un ressort hélicoïdal ou ressort boudin, est arrangé pour relier la pièce de réglage (7) à la console (3) en la sollicitant en rotation autour de l'axe (A9) de leur liaison pivot commune, la seconde liaison pivot (9), dans le sens d'une ouverture maximale de l'angle (AN) entre la console (3) et le bras pivotant (4).

2. Dispositif selon la revendication 1, **caractérisé en ce que** l'organe allongé rigide (10) est relié à ses deux extrémités opposées, par des liaisons articulées (11, 11') respectives, préférentiellement à pivot, à la pièce de réglage (7) et au bras (4) pivotant.

3. Dispositif selon la revendication 2, **caractérisé en ce que** l'organe allongé rigide (10) se présente sous la forme d'un actionneur, par exemple un vérin hydraulique, pouvant être commandé de manière déportée par l'intermédiaire d'un circuit (10'), les axes (A11, A11') de ses liaisons pivots (11, 11') étant avantageusement parallèles aux axes (A5, A9) respectivement des liaisons pivots bras (4)/console (3) et pièce de réglage (7)/console (3).

4. Dispositif selon l'une quelconque des revendications 1 à 3, **caractérisé en ce que** la pièce de réglage (7) comporte une butée (12) glissante ou roulante, destinée à venir en appui sur le bras (4) lorsque ce dernier vient en repliement commandé contre la console (3), dans une configuration escamotée de transport du dispositif (1).

5. Dispositif selon l'une quelconque des revendications 1 à 4, **caractérisé en ce que** la pièce de réglage (7) comporte au moins une butée fixe (13), destinée à venir en appui sur la console (3) lorsque le bras pivotant (4) vient en repliement commandé ou forcé contre la console (3).

6. Dispositif selon l'une quelconque des revendications 1 à 5, **caractérisé en ce que** la console (3) comporte deux parois latérales (14, 14') entre lesquelles sont montés la pièce de réglage (7) et le bras (4) pivotant au niveau de paliers rotatoires respectifs d'axes (A5) et (A9), ladite console (3) se présentant avantageusement sous la forme d'une pièce allongée avec une section en U.

7. Machine agricole (2) portée, semi-portée ou tractée par un véhicule tracteur, notamment charrue réversible, comprenant un dispositif de bras de traction articulé (1) comportant une ancre d'accrochage (6) apte et destinée à venir en prise libérable avec une canne d'accrochage (15) d'un outil (16) destiné à être traîné temporairement au moins derrière ou à côté de la machine en cours d'utilisation,
machine agricole (2) **caractérisée en ce que** le dispositif de bras articulé (1) est un dispositif selon l'une quelconque des revendications 1 à 6.

8. Machine agricole selon la revendication 7, **caractérisée en ce que** la console (3) du dispositif de bras articulé (1) est fixée à l'avant du bâti (2') de la machine agricole (2), préférentiellement au niveau ou à proximité de son dispositif d'attelage (2") avec le tracteur.

9. Machine agricole selon l'une quelconque des revendications 7 et 8, **caractérisée en ce que** la pièce de réglage (7) et le bras articulé (4) sont reliés entre eux par un actionneur linéaire (10), préférentiellement un vérin hydraulique, la position en rotation du bras articulé (4) autour de sa liaison pivot (5) avec la console (3) étant déterminée conjointement par la pièce de réglage (7) et sa position par rapport à la console (3) et par l'actionneur (10), préférentiellement commandé depuis le tracteur par un circuit (10') adapté.

## Patentansprüche

1. Vorrichtung mit einem gelenkigen Zugarm für eine landwirtschaftliche Maschine, insbesondere einen Pflug, die einerseits eine Konsole (3) zur Befestigung an der Maschine (2) und andererseits einen Arm (4), der über eine Schwenkverbindung (5) mit der Konsole (3) an einem (4') seiner beiden Enden verbunden ist und an seinem anderen Ende (4") einen Einhängepunkt (6) aufweist, und schließlich ein Abstands- oder Einstellteil (7) für die Winkelposition des Arms (4) in Bezug auf die Konsole (3) umfasst, wobei dieses Teil (7) mit mindestens einem elastisch verformbaren Element (8) verbunden ist und mit dem Arm (4) und der Konsole (3) verbunden ist, wobei das Einstellteil die Form eines Sektors hat und einerseits über eine zweite spezielle Schwenkverbindung (9), die sich von der ersten Schwenkverbindung (5) Arm (4)/Konsole (3) unterscheidet und mit einer Achse (A9), die parallel zu deren Achse (A5) verläuft, verbunden ist, und andererseits über ein längliches, starres Bauteil (10), das in der Länge verstellbar ist, mit dem Arm (4) verbunden ist,
Vorrichtung (1) **dadurch gekennzeichnet, dass** das mindestens ein elastisch verformbare Element (8), beispielsweise in Form mindestens einer Schraubenfeder oder Spiralfeder, so angeordnet ist, dass es das Einstellteil (7) mit der Konsole (3) verbindet und diese um die Achse (A9) ihrer gemeinsamen Schwenkverbindung (9) in Richtung einer maximalen Öffnung des Winkels (AN) zwischen der Konsole (3) und dem Schwenkarm (4) dreht.

2. Vorrichtung nach Anspruch 1, **dadurch gekennzeichnet, dass** das längliche, starre Bauteil an seinen beiden gegenüberliegenden Enden über jeweilige Gelenkverbindungen (11, 11'), vorzugsweise Schwenkverbindungen, mit dem Einstellteil (7) und dem Schwenkarm (4) verbunden ist.

3. Vorrichtung nach Anspruch 2, **dadurch gekennzeichnet, dass** das längliche, starre Bauteil (10) die Form eines Aktuators, beispielsweise eines Hydraulikzylinders hat, der über einen Schaltkreis (10') ferngesteuert werden kann, wobei die Achsen (A11, A11') seiner Schwenkverbindungen (11, 11') (d. h. seines Körpers und seiner Stange) vorteilhafterweise parallel zu den jeweiligen Achsen (A5, A9) der Schwenkverbindungen Arm (4)/Konsole (3) und Einstellteil (7)/Konsole (3) sind.

4. Vorrichtung nach einem der Ansprüche 1 bis 3, **dadurch gekennzeichnet, dass** das Einstellteil (7) einen gleitenden oder rollenden Anschlag (12) aufweist, der dazu bestimmt ist, auf dem Arm (4) zur Anlage zu kommen, wenn dieser in einer eingeklappten Transportkonfiguration der Vorrichtung (1) gegen die Konsole (3) gesteuert eingeklappt wird.

5. Vorrichtung nach einem der Ansprüche 1 bis 4, **dadurch gekennzeichnet, dass** das Einstellteil (7) mindestens einen festen Anschlag (13) aufweist, der dazu bestimmt ist, auf der Konsole (3) zur Anlage zu kommen, wenn der Schwenkarm (4) gesteuert oder erzwungen gegen die Konsole (3) geklappt wird.

6. Vorrichtung nach einem der Ansprüche 1 bis 5, **dadurch gekennzeichnet, dass** die Konsole (3) zwei Seitenwände (14, 14') aufweist, zwischen denen das Einstellteil (7) und der Schwenkarm (4) an jeweiligen Drehlagern mit Achsen (A5) und (A9) montiert sind, wobei die Konsole (3) vorteilhafterweise die Form eines länglichen Teils mit einem U-förmigen Querschnitt aufweist.

7. Landwirtschaftliche Maschine (2), die angebaut, aufgesattelt oder von einem Zugfahrzeug gezogen wird, insbesondere Wendepflug, der eine gelenkige Zugarmvorrichtung (1) mit einen Einhängepunkt (6) umfasst, der dazu geeignet und bestimmt ist, lösbar in eine Kupplungsstange (15) eines Werkzeugs (16) einzugreifen, das dazu bestimmt ist, zumindest vorübergehend hinter oder neben der Maschine während des Gebrauchs gezogen zu werden, Landwirtschaftliche Maschine (2) **dadurch gekennzeichnet, dass** die Gelenkarmvorrichtung (1) eine Vorrichtung nach einem der Ansprüche 1 bis 6 ist.

8. Landwirtschaftliche Maschine nach Anspruch 7, **dadurch gekennzeichnet, dass** die Konsole (3) der Gelenkarmvorrichtung (1) an der Vorderseite des Rahmens (2') der landwirtschaftlichen Maschine (2) befestigt ist, vorzugsweise auf Höhe oder in der Nähe ihrer Kupplungsvorrichtung (2") mit dem Traktor.

9. Landwirtschaftliche Maschine nach einem der Ansprüche 7 und 8, **dadurch gekennzeichnet, dass** das Einstellteil (7) und der Gelenkarm (4) über einen linearen Aktuator (10), vorzugsweise einen Hydraulikzylinder, miteinander verbunden sind, wobei die Drehposition des Gelenkarms (4) um seine Schwenkverbindung (5) mit der Konsole (3) gemeinsam durch das Verstellteil (7) und dessen Position relativ zur Konsole (3) und durch den Aktuator (10) bestimmt wird, der vorzugsweise vom Traktor aus über einen geeigneten Schaltkreis (10') gesteuert wird.

## Claims

1. Articulated traction arm device (1) for an agricultural machine (2), in particular for a plough, comprising, on the one hand, a bracket (3) for fixing to the machine (2), on the other hand, an arm (4) connected by a pivot connection (5) to the bracket (3) at one (4') of its two ends and comprising, at its other end (4"), a hooking anchor (6) and, finally, an adjustment piece (7) for adjusting the angular position of the arm (4) relative to the bracket (3), this piece (7) being associated with at least one elastically deformable element (8) and connected to the said arm (4) and to the said bracket (3), the adjustment piece (7) being in the form of a sector and being connected, on the one hand, to the bracket (3) by a second specific pivot connection (9), distinct from the first arm (4)/bracket (3) pivot connection (5) and with an axis (A9) parallel to that (A5) of the latter, and, on the other hand, to the arm (4) by means of a rigid elongated member (10), adjustable in length,
device (1) **characterised in that** the said at least one elastically deformable element (8), for example in the form of at least one coil spring or helical spring, is arranged to connect the adjustment piece (7) to the bracket (3) by applying a rotational force to it about the axis (A9) of their common pivot connection, the second pivot connection (9), in the direction of a maximum opening of the angle (AN) between the bracket (3) and the pivoting arm (4).

2. Device according to claim 1, **characterised in that** the rigid elongated member (10) is connected at its two opposite ends, by respective articulated connections (11, 11'), preferably pivot connections, to the adjustment piece (7) and to the pivoting arm (4).

3. Device according to claim 2, **characterised in that** the rigid elongated member (10) is in the form of an actuator, for example a hydraulic cylinder, which can be remotely controlled via a circuit (10'), the axes (A11, A11') of its pivot connections (11, 11') being advantageously parallel to the axes (A5, A9) of the arm (4)/bracket (3) and adjustment piece (7)/bracket (3) pivot connections, respectively.

4. Device according to any one of claims 1 to 3, **characterised in that** the adjustment piece (7) comprises a sliding or rolling stop (12) designed to come into contact with the arm (4) when the latter is folded back in a controlled manner against the bracket (3) in a retracted transport configuration of the device (1).

5. Device according to any one of claims 1 to 4, **characterised in that** the adjustment piece (7) comprises at least one fixed stop (13) designed to come into contact with the bracket (3) when the pivoting arm (4) is folded back in a controlled or forced manner against the bracket (3).

6. Device according to any one of claims 1 to 5, **characterised in that** the bracket (3) comprises two side walls (14, 14') between which are mounted the adjustment piece (7) and the pivoting arm (4) at respective rotary bearings of axes (A5) and (A9), the said bracket (3) advantageously taking the form of an elongated piece with a U-shaped section.

7. Agricultural machine (2) mounted, semi-mounted or tractor- towed, in particular a reversible plough, comprising an articulated traction arm device (1) with a hooking anchor (6) able and intended to engage releasably with a hooking rod (15) of a tool (16) intended to be temporarily towed at least behind or alongside the machine during use,
agricultural machine (2) **characterised in that** the articulated arm device (1) is a device according to any one of claims 1 to 6.

8. Agricultural machine according to claim 7, **characterised in that** the bracket (3) of the articulated arm device (1) is fixed to the front of the frame (2') of the agricultural machine (2), preferably at or near its hitching device (2") with the tractor.

9. Agricultural machine according to any one of claims 7 and 8, **characterised in that** the adjustment piece (7) and the articulated arm (4) are connected to each other by a linear actuator (10), preferably a hydraulic cylinder, the rotational position of the articulated arm (4) around its pivot connection (5) with the bracket (3) being determined jointly by the adjustment piece (7) and its position relative to the bracket (3) and by the actuator (10), preferably controlled from the tractor by a suitable circuit (10').
